# EUROPEAN PATENT SPECIFICATION

(11) **EP 2 606 734 B1**
(45) Date of publication and mention of the grant of the patent: **09.12.2015**
(21) Application number: 12198897.6
(22) Date of filing: 21.12.2012
(51) Int. Cl.: A22B 3/08

(54) **Device and method for stunning birds such as poultry**
Vorrichtung und Verfahren zur Geflügelbetäubung
Appareil et procédé d'étourdissement de volailles

(30) Priority: 22.12.2011 NL 2008019
(43) Date of publication of application: 26.06.2013
(73) Proprietor: Dutch Vision Solutions, 3082 PD Rotterdam (NL)
(72) Inventor: Schmidt, Michel, 3082 PD Rotterdam (NL)
(74) Representative: V.O.

(56) References cited:
- WO-A1-2010/133379

## Description

The invention relates to a device for stunning birds such as poultry prior to slaughter of the birds.

It is known to stun birds by means of gas or by means of electrical stunning. In electrical stunning, to which the invention relates, an electrical current is conducted through the brain of the bird, this current resulting in an epileptic seizure whereby the bird loses consciousness.

Such a device is therefore known according to the prior art which is provided with a stunning member provided with at least one electrode for subjecting the birds to an electrical potential and a voltage source connected to at least the first electrode, wherein the voltage source is dimensioned to cause an electric current to flow through the brain of the bird for stunning which is sufficiently strong to stun the bird.

In such a prior art stunning device the one electrode is formed by a water bath, wherein the bird is guided with its head through the water bath. The other electrode is usually formed by the hooks from which the bird is suspended by its legs. The current therefore flows through the body of the bird and, depending on the depth to which the bird is guided in the water, also through its head. Because this process has many variables, the extent of stunning is likewise variable. It may then occur that the current flowing through the brain of the bird is not strong enough or does not last long enough to cause sufficiently strong stunning.

In WO 2010/133379 is disclosed to stun poultry by suspending the poultry with the poultry head down, positioning the suspended poultry head and stunning the poultry via the suspended and positioned poultry head.

The object of the present invention is to provide such a stunning device in improved form, wherein the above stated drawbacks are obviated.

This object is achieved with a stunning device according to claim 1.

As a result of these measures the stunning current flows only through the head of the bird. This has the result that the electrical resistance encountered by this current is smaller than that in the situation according to the prior art, since in this situation the current must flow through the whole body. This resistance is also less susceptible to variations. This device also provides the option of better fixing of the head of the bird prior to the stunning so that the position of the head can vary less and the electrical resistance is more stable.

The device comprises at least one pair of hooks for suspending the birds for stunning by their legs, transport means for transporting the at least one pair of hooks and the bird suspended therefrom over a first path to a position above the stunning member where the head of the bird is located in the stunning member, and positioning means for positioning the head of the bird at the location of the stunning member. Using these means it is easier to use the device for large numbers of birds.

The positioning means are adapted to move from an open position to a positioning position during the movement through the first path. Owing to these measures the head and the neck of the bird are urged to the desired position irrespective of the initial random position. This measure also serves for easier performing of the stunning in automated manner.

The invention moreover provides a method according to claim 14. In an embodiment of the method the birds are moved during stunning over a second path, the head of the birds is fixed at least during the stunning and the head is released following the stunning.

In addition, it is attractive that the stunning member is adapted to perform a stunning during a movement over a second path, is adapted to perform a stunning during the movement over the first path, and that the electrodes of the stunning member are adapted to fix the head of the bird and to release the head following the stunning. The stunning can hereby be performed even more easily in automated manner.

Automation is facilitated still further when the positioning means are adapted to co-displace over a first path with a corresponding part of the path of the hooks and when the at least one stunning member is adapted to co-displace over a second path with a corresponding part of the path of the hooks.

A structurally attractive embodiment results when the device is adapted to stun a number of birds successively, when the transport means are provided with a chain which is guided along a linear guide and on which a number of hooks are mounted, wherein the guide is adapted to guide the chain along at least the first and the second path, and with drive means for driving the chain in its movement, when the positioning means are placed on a first movable carrier which is driven by drive means and adapted to move the positioning means along at least the first path, the drive means are adapted to move the positioning means on the carrier synchronously with the hooks on the chain within the first path, and when the stunning members are placed on a second movable carrier which is driven by drive means and adapted to move the stunning members along the second path and the drive means are adapted to move the stunning members on the carrier synchronously with the hooks on the chain within the second path. Using these measures a construction is obtained which can be easily integrated into an already existing slaughter line for poultry since it makes use of a transport system which is usually already available.

The first carrier preferably comprises a first substantially horizontally placed disc which is rotatable about a vertical shaft and on the edge of which the positioning means are placed, and the second carrier comprises a second substantially horizontally placed disc which is rotatable about a vertical shaft and on the edge of which the stunning members are placed. This measure makes it possible to make simultaneous use of a number of stunning members so that the capacity of the device is increased. The stunning members initiate stunning successively here. Stunning processes thus still take place partially simultaneously, albeit with different starting times, so increasing the capacity of the device.

According to a further preferred embodiment, the positioning means each comprise a closing element which is movable between a rest position and an active position and which is coupled to an operating element, and the device comprises a fixed disc provided with a contour, this contour being adapted to operate the operating elements over at least the first path. The positioning means are hereby controlled in automatic and location-dependent manner, i.e. synchronously.

The closing element comprises a substantially V-shaped part which in its rest position extends substantially horizontally with its open end directed radially outward, which in its active position extends substantially vertically with its open end upward and which is connected to a rod-like operating element connected pivotally to the first disc. This has the advantage that the heads of the birds are urged to a position which they already assume naturally, so that the natural instincts of the birds are not disturbed. It is noted here that the transport means, in addition to being provided with hooks for suspending the birds, are also provided with supports which extend downward at the position of the hooks along the belly of the birds suspended by their legs and which limit the movement of the suspended birds. It is noted that the V-shaped part can also be applied in other configurations.

According to another preferred embodiment, each of the stunning members comprises a fixed electrode and a movable electrode coupled to an operating element, and the device comprises a fixed disc provided with a contour, this contour being adapted to operate the operating elements over at least the second path. Automation is obtained in simple manner similarly as in the case of the positioning means.

This embodiment is preferably embodied structurally in that the movable electrodes are each connected to one leg of an L-shaped arm connected to the second disc for rotation about a horizontal shaft, the second leg of the arm is connected to a roller which extends in vertical direction through an opening arranged in the second disc and which can be brought into contact with the contour of the fixed disc arranged under the second disc, and the arm is coupled to a spring adapted to urge the second electrode to the fixing position.

In order to enable a good contact between the electrodes and the head of the animal preferably at least one of the electrodes is substantially flat and provided with protrusions directed toward the other electrode. The protrusions come into contact first with the feathers and the skin of the bird so that good contact is guaranteed. A stunning current already flows through the head of the bird before the animal can feel the protrusions. It will also be apparent that both electrodes are most preferably substantially flat and provided with protrusions directed toward the other electrode.

For the purpose of further automation the device is preferably provided with a switch member connected between the voltage source and the electrodes of the stunning members for the purpose of connecting the voltage source to the electrodes of the stunning members subject to the rotational position of the second rotatable disc. A degree of synchronization is hereby automatically achieved.

In order to cause stunning of the animal, i.e. an epileptic seizure of sufficiently long duration, a certain current must be exceeded. In order to be certain that the majority of the number of animals are stunned to sufficient extent, it is attractive for the device to be provided with a control element for controlling the voltage source and a current sensor, wherein the control element is adapted to measure the electrical resistance between the electrodes and to control the voltage source following measurement of the electrical resistance so that the current flowing through the brain of the bird is strong enough to stun the bird.

The construction of the device is further simplified when the linear guide of the chain over the first path comprises a third disc which is coupled in rotation to the first disc and placed above the first disc and which is provided with engaging means for engaging the chain, and the linear guide of the chain over the second path comprises a fourth disc which is coupled in rotation to the second disc and placed above the second disc and which is provided with engaging means for engaging the chain. A coupling is hereby obtained between the drive of the transport means and that of the device according to the invention, wherein synchronization between both parts is moreover obtained. The coupling also provides the option of driving only one of the two parts.

The present invention will be elucidated hereinbelow with reference to the accompanying drawings, in which:
Figure 1 is a schematic horizontal cross-sectional view of a device according to the invention;
Figure 2 is a schematic side view of the device shown in figure 1;
Figure 3 is a perspective view of the device shown in figures 1 and 2;

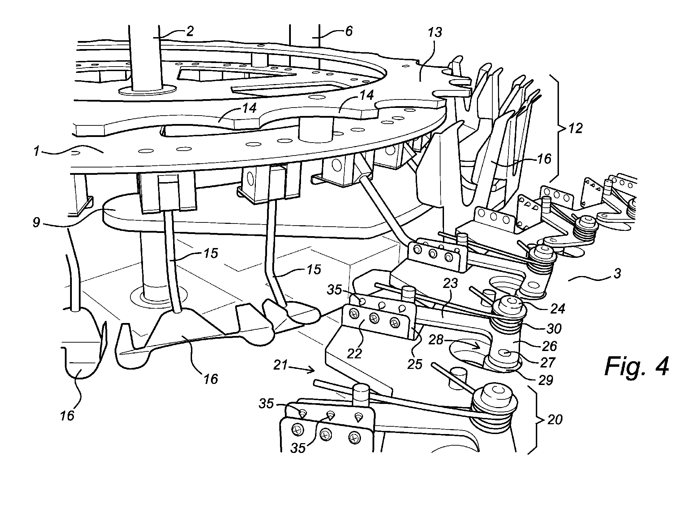

Figure 4 is a perspective view of a detail of the device according to the invention; and

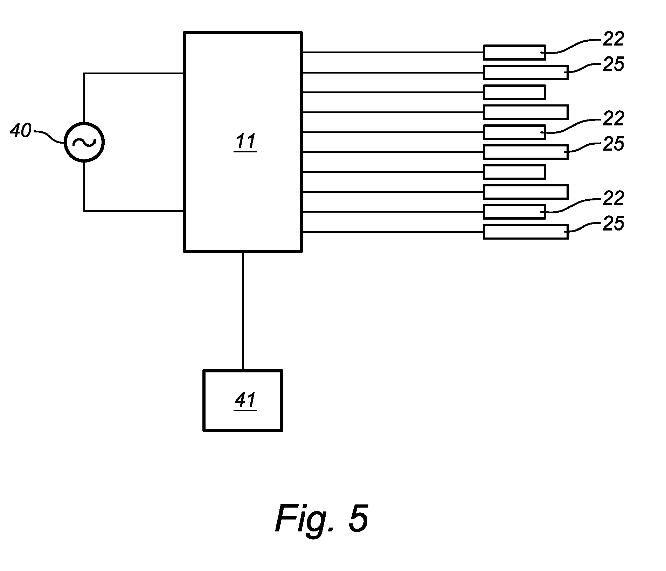

Figure 5 shows a diagram of the most important parts of the electronic circuit.

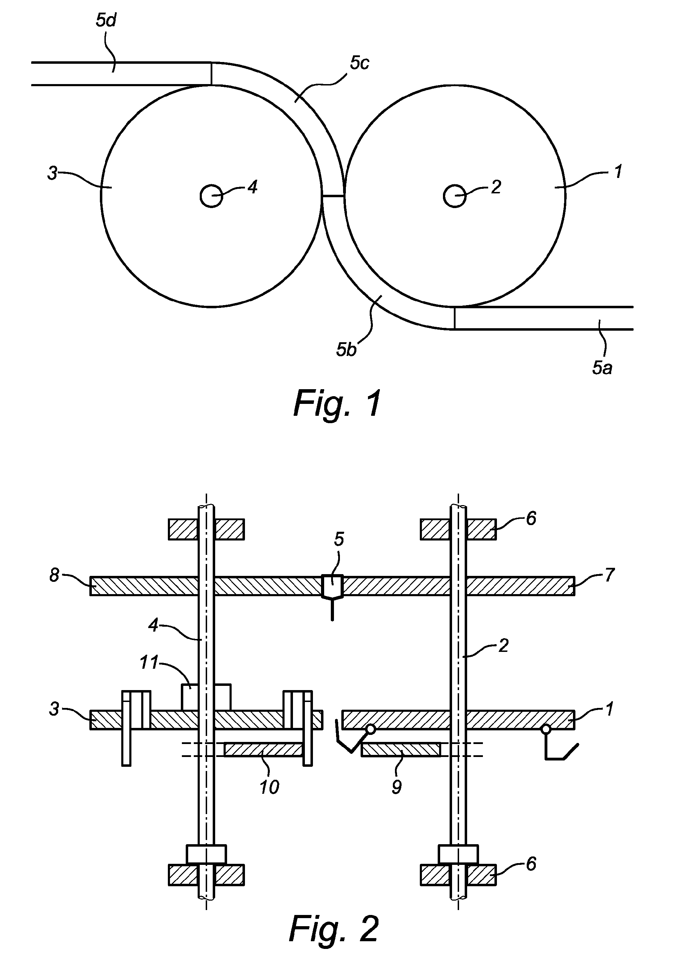

A structural aspect of the device is based on the guiding of the birds to be stunned along a track guided along two discs as shown in figure 1. The device according to the invention comprises a first disc 1 which is mounted on a vertically extending shaft 2 and a second disc 3 mounted on a vertically extending shaft 4. Shafts 2 and 4 are mounted in a frame 6. Both discs 1, 3 extend at the same height. Placed on shafts 2, 4 are two guide discs 7, 8 which are not shown in figure 1. A conveyor track 5 connected to frame 6 comprises a part 5a extending tangentially to the first guide disc 7, a curved part 5b extending along the periphery of the first guide disc 6, a curved part 5c extending along the periphery of the second guide disc 8 and a part 5d extending away from the second guide disc 8. Guide discs 7, 8 are provided with teeth which engage in a part of the chain forming part of conveyor track 5. Conveyor track 5 preferably forms a part of a larger conveyor track which is also adapted to carry the birds for slaughter along other stations. Also arranged on chain 5 are prior art carriages, not shown in the drawings, which are provided with hooks from which the legs of the birds can be suspended and with a support frame for supporting the suspended birds.

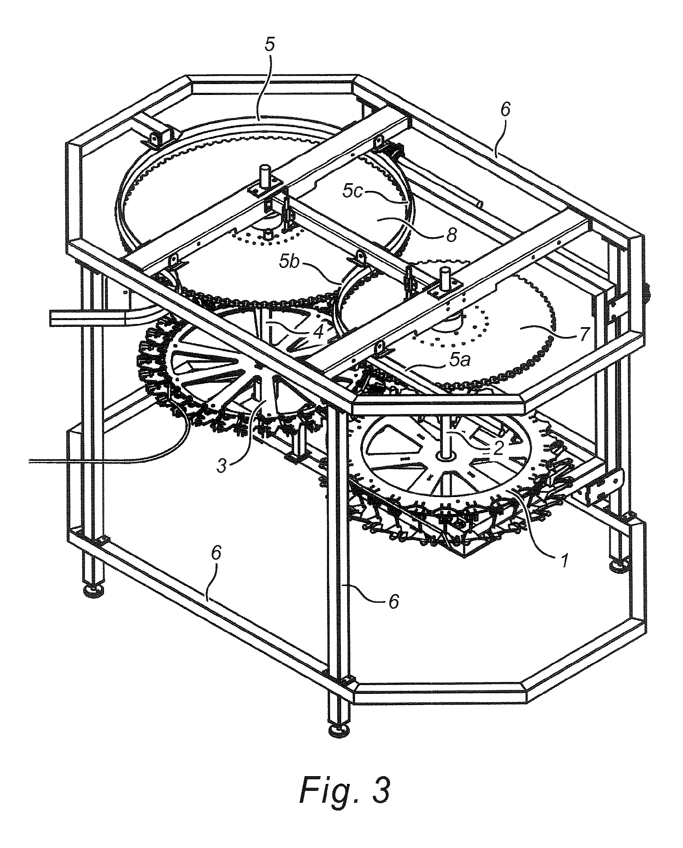

The chain of conveyor track 5 is located at the same height as guide discs 7, 8 and the chain is in engagement with teeth arranged on the periphery of the guide discs. Contour discs 9, 10 are arranged connected fixedly to frame 6 under the respective discs 1, 3. These contour discs are shown in figure 3. The contour of these contour discs 9, 10 serves to control members placed on discs 1, 3. Also arranged on second disc 3 is a switch member 11, the operation of which will be elucidated below.

It is noted that the conveyor track 5 as described above is per se known; it is applied in the slaughter of poultry. The conveyor tracks may therefore comprise further parts and measures which are already known per se.

The positioning means 12 present on first disc 1 will now be discussed. The positioning means comprise an auxiliary disc 13 provided with arcuate indentations 14 arranged at regular intervals along the periphery. These indentations 14 serve to position birds which are suspended from the carriage of the transport means and the belly of which is directed toward the relevant indentation. Placed at the position of each of the indentations 14 on the underside of disc 1 is a bearing 15 in which a bent arm 15 is rotatably connected. Arm 15 is connected at its free end to a V-shaped plate 16 which functions as closing element. The dimensioning of arm 15 and plate 16 serves to enclose the neck of a bird suspended from the conveyor track. The neck of the bird extends here through the recess in the V-shaped plate 16.

For the purpose of controlling the movement of V-shaped plate 16 and arm 15 use is made of the contour disc 9 arranged fixedly under disc 1. The contour of contour disc 9 is adapted to move the V-shaped plate, as it moves through a first path corresponding to part 5b of conveyor track 5, gradually from a lower position, in which the neck and the head of the bird suspended from the conveyor track can move freely, to a position in which the neck and the head of the bird are enclosed in the tip of the recess in V-shaped plate 16. The position of the head of the bird is hereby positioned to sufficient extent to be engaged by a stunning member placed on the second disc.

In order to stun the birds use is made of stunning members which are placed on second disc 3 and which are designated as a whole with 20. Each stunning member 20 comprises a notch 21 arranged in second disc 3. Arranged on one side of each notch is a first fixed electrode formed by a metal plate 22. An arm 23 is connected for rotation about a vertical shaft 24 to second disc 3 at the position of each of the notches 21. Placed on arm 23 is a second electrode 25 which, as a result of the rotatability of the arm, is movable inside notch 21. Both electrodes 22, 25 are provided with protrusions 35 which are directed toward the other electrode 25, 22 and which are formed in the present embodiment by self-tapping screws. These protrusions serve to improve the electrical contact between the electrodes and the head of the bird clamped therebetween. Arm 23 is provided with a protruding part 26 extending transversely of the longitudinal direction of arm 23 from shaft 24. Mounted on the free end of protruding part 26 is a shaft 27 extending downward parallel to shaft 24 through an opening 28 arranged in second disc 3. Mounted round this shaft 27 is a roller 29 which, depending on the rotational position of the disc, is in contact with a contour of the contour disc 10 arranged under second disc 3. Finally arranged around vertical shaft 24 is a coil spring 30, the arms of which are connected to cams 31 and 32 arranged respectively on second disc 3 and on the arm. Coil spring 30 is dimensioned for the purpose of urging second electrode 25 to its closed position. Electrode 25 will therefore be closed unless it is urged to the opened position by the contour on contour disc 9.

Finally, the device is provided with a switch member 11. Switch member 11 is connected to a source 40 of electrical energy, to a rotation detector 41 and to each pair of first and second electrodes 22, 25. Switch member 11 is adapted to supply the electrical energy from the source 40 to the pair of electrodes 22, 25 or to the pairs of electrodes 22, 25 which are located at a position such that the head of the bird present between these electrodes is stunned. In order to fulfil this function the switch member is connected to a rotation detector 41 which gives a signal to the switch member representing the position of disc 3.

In order to achieve an adequate stunning of the bird it is important that a current of the correct magnitude flows through the head of the bird. The source 40 of electrical energy can be embodied for this purpose as a power source which can be switched on and off, although it is likewise possible for the source 40 to be embodied as a controllable voltage source and for the switch member 11 to be adapted to measure the current flowing through the head. When the magnitude of this current differs from the desired value, the magnitude of the current can be modified so as to obtain the desired current value.

The operation of the device according to the invention will now be elucidated. A situation is assumed here in which conveyor track 5 forms part of a larger conveyor track initially leading to a station where the birds for slaughter are suspended from the conveyor track, subsequently leading along the device according to the invention and then to stations for killing and slaughtering the birds. The birds for slaughter are initially suspended by their legs from the hooks of the carriages of the conveyor track. The conveyor track transports the birds further to the device according to the invention where the belly of a bird enters the arcuate indentation 14 of the first disc and where the neck and the head of the bird are received in the recess in V-shaped plate 16 while being urged upward by the contour of contour disc 9 via the arm, whereby the degree of confinement increases as the bird moves in the direction of movement of the conveyor track. This process takes place over the first path corresponding to part 5b of the conveyor track. At the point where the conveyor track is in contact with first disc 1 and with second disc 3 the head of the bird is moved between electrodes 22, 25 as a result of the fact that conveyor track 5 has moved closer to the second disc.

The V-shaped plate must then be moved quickly out of its position limiting the freedom of movement of the head in order to release the head of the bird so that it can co-displace with the second disc between the electrodes. The contour disc is shaped accordingly for this purpose. Electrodes 22, 25 are moved toward each other by the force of the associated coil spring 30. Depending on the position of the disc, this movement is after all allowed by the contour of contour disc 10. A voltage is simultaneously applied between the electrodes by source 40 of electrical energy and the contact member. The current caused hereby and flowing through the head of the bird results in stunning of the bird. As the conveyor track moves further the electrodes 22, 25 are moved apart again by the contour so that the head of the bird is released and the bird on the conveyor track can move further to the station where the bird is killed.

Various modifications can be made to the above described structure; the conveyor track can thus particularly form part of a larger conveyor track which can lead along stations for performing other processes. The conveyor track can also have a different construction and the various other components of the device can also have a different construction.

## Claims

1. Device for stunning birds such as poultry prior to slaughter of the birds, comprising:
- a stunning member (20) provided with at least a first electrode (22) and a second electrode (25) for subjecting the birds to an electrical potential and adapted to make contact with both sides of the head of the bird;
- a voltage source (40) connectable to the first (22) and the second electrode (25);
- wherein the voltage source (40) is dimensioned to cause an electric current to flow through the brain of the bird for stunning which is sufficiently strong to stun the bird;
- at least one pair of hooks for suspending the birds for stunning by their legs;
- transport means for transporting the at least one pair of hooks and the bird suspended therefrom over a first path (5b) to a position above the stunning member (20) where the head of the bird is located in the stunning member (20); and
- positioning means (12) for positioning the head of the bird at the location of the stunning member (20), adapted to move from an open position to a positioning position during the movement through the first path (5b), **characterized in that** the transport means (5) are additionally provided with supports (14) that extend downward at the position of the hooks along the belly of the birds suspended by their legs and which limit the movement of the suspended birds, and **in that** the positioning means (12) each comprise a closing element (16) that comprises a substantially V-shaped part.

2. Device as claimed in claim 1, **characterized in that** the stunning member (12) is adapted to perform a movement over a second path (5a) and is adapted to perform a stunning during the movement over the second path (5a), and that the electrodes (22,25) of the stunning member (12) are adapted to fix the head of the bird and, following the stunning, to subsequently release the head during the movement through the second path (5a).

3. Device as claimed in claim 1 or 2, **characterized in that** the positioning means (12) are adapted to co-displace over a first path (5b) with a corresponding part of the path of the hooks and that the at least one stunning member (20) is adapted to co-displace over a second path (5a) with a corresponding part of the hooks.

4. Device as claimed in claim 3, **characterized in that**
- the device is adapted to stun a number of birds successively,
- the transport means are provided with a chain (5) which is guided along a linear guide and on which a number of hooks are mounted, wherein the guide is adapted to guide the chain (5) along at least the first (5b) and the second path (5a), and with drive means for driving the chain (5) in its movement,
- the positioning means (12) are placed on a first movable carrier (1) which is driven by drive means and adapted to move the positioning means (20) along at least the first path (5b), the drive means are adapted to move the positioning means (20) on the carrier (1) synchronously with the hooks on the chain (5) within the first path (5b), and
- the stunning members (20) are placed on a second movable carrier (3) which is driven by drive means and adapted to move the stunning members (20) along the second path (5a) and the drive means are adapted to move the stunning members (20) on the carrier (3) synchronously with the hooks on the chain (5) within the second path (5a).

5. Device as claimed in claim 4, **characterized in that** the first carrier comprises a first substantially horizontally placed disc (1) which is rotatable about a vertical shaft (2) and on the edge of which the positioning means (12) are placed, and that the second carrier comprises a second substantially horizontally placed disc (3) which is rotatable about a vertical shaft (4) and on the edge of which the stunning members (20) are placed.

6. Device as claimed in any of the foregoing claims, **characterized in that** the positioning means (12) each comprise a closing element (16) which is movable between a rest position and an active position and which is coupled to an operating element (15), and that the device comprises a fixed disc (9) provided with a contour, this contour being adapted to operate the operating elements (15) over at least the first path (5b).

7. Device as claimed in claim 6, **characterized in that** the closing element (16) comprises a substantially V-shaped part which in its rest position extends substantially horizontally with its open end directed radially outward and in its active position extends substantially vertically with its open end upward, and which is connected to a rod-like operating element (15) connected pivotally to the first disc (1).

8. Device as claimed in any of the claims 4-7, **characterized in that** each of the stunning members (20) comprises a fixed electrode (22) and a movable electrode (25) coupled to an operating element (23), and that the device comprises a fixed disc (10) provided with a contour, this contour being adapted to operate the operating elements (23) over at least the second path (5a).

9. Device as claimed in claim 8, **characterized in that** the movable electrodes (25) are each connected to one leg (23) of an L-shaped arm connected to the second disc (3) for rotation about a horizontal shaft, and that the second leg (26) of the arm is connected to a roller (29) which extends in vertical direction through an opening (28) arranged in the second disc (3) and which can be brought into contact with the contour of the fixed disc (10) arranged under the second disc (3), and that the arm is coupled to a spring (30) adapted to urge the second electrode (25) to the fixing position.

10. Device as claimed in claim 9, **characterized in that** at least one of the electrodes (22 25) is substantially flat and provided with protrusions (35) directed toward the other electrode (22 25).

11. Device as claimed in claim 8, 9 or 10, **characterized in that** the device is provided with a switch member (11) connected between the voltage source (40) and the electrodes (22 25) of the stunning members (12) for the purpose of connecting the voltage source (40) to the electrodes (22 25) of the stunning members (20) subject to the rotational position of the second rotatable disc (3).

12. Device as claimed in any of the claims 8-11, **characterized in that** the device is provided with a control element (11) for controlling the voltage source (40) and a current sensor, wherein the control element (11) is adapted to measure the electrical resistance between the electrodes (22 25) and to control the voltage source (40) following measurement of the electrical resistance so that the current flowing through the brain of the bird is strong enough to stun the bird.

13. Device as claimed in any of the claims 3-12, **characterized in that** the linear guide of the chain (5) over the first path (5b) is formed by a third disc (7) which is coupled in rotation to the first disc (1) and placed above the first disc (1) and which is provided with engaging means for engaging the chain (5), and that the linear guide of the chain (5) over the second path is formed by a fourth disc (8) which is coupled in rotation to the second disc (3) and placed above the second disc (8) and which is provided with engaging means for engaging the chain.

14. Method for stunning birds such as poultry prior to slaughter of the birds, comprising the step of subjecting the birds to an electrical potential, wherein the electric current through the brain of the bird for stunning is sufficiently strong to stun the bird, wherein the stunning takes place by applying electrodes (22 25) to both sides of the head and neck of the bird and subsequently connecting the electrodes (22 25) to a voltage source (40), wherein prior to stunning, the birds are suspended by their legs and transported by transport means (5) over a first path (5b) to a position above a stunning member (20) where the head of the bird is located in the stunning member (20) wherein the head of the bird is positioned by positioning means (12) each comprising a closing element (16) that comprises a substantially V-shaped part while moving through the first path (5b), wherein the movement of the suspended birds is limited by supports (14) arranged on the transport means (5) which supports (14) extend downward along the belly of the birds suspended by their legs.

15. Method as claimed in claim 14, **characterized in that** the birds are moved during stunning over a second path (5a), that the head of the birds is fixed at least during the stunning and that the head is released following the stunning.

## Patentansprüche

1. Vorrichtung zur Betäubung von Vögeln, wie beispielsweise Geflügel, vor dem Schlachten der Vögel, umfassend:
- ein Betäubungselement (20), versehen mit mindestens einer ersten Elektrode (22) und einer zweiten Elektrode (25), um die Vögel einem elektrischen Potenzial auszusetzen, und angeordnet, um mit beiden Seiten des Kopfes des Vogels in Berührung zu kommen;
- eine Spannungsquelle (40), anschließbar an die erste (22) und die zweite Elektrode (25);
- wobei die Spannungsquelle (40) dimensioniert ist, um einen elektrischen Strom, der stark genug ist, den Vogel zu betäuben, durch das Gehirn des Vogels zur Betäubung fließen zu lassen;
- mindestens ein Paar Haken, um die Vögel zum Betäuben an ihren Beinen aufzuhängen;
- Transportmittel, um das mindestens eine Paar Haken und den daran aufgehängten Vogel über eine erste Bahn (5b) zu einer Position über dem Betäubungselement (20), wo sich der Kopf des Vogels in dem Betäubungselement (20) befindet, zu transportieren;
und
- Positioniermittel (12) zum Positionieren des Kopfes des Vogels an der Stelle des Betäubungselements (20), geeignet, um sich von einer geöffneten Position in eine Positionierungsposition während der Bewegung durch die erste Bahn (5b) zu bewegen,
**dadurch gekennzeichnet, dass** die Transportmittel (5) zusätzlich mit Haltern (14) versehen sind, die abwärts an der Position der Haken entlang dem Leib der an ihren Beinen aufgehängten Vögel verlaufen und die die Bewegung des aufgehängten Vogels einschränken, und dadurch, dass die Positioniermittel (12) jeweils ein Schließelement (16) umfassen, das im Wesentlichen ein V-förmiges Teil umfasst.

2. Vorrichtung nach Anspruch 1, **dadurch gekennzeichnet, dass** das Betäubungselement (12) geeignet ist, um eine Bewegung über eine zweite Bahn (5a) durchzuführen, und geeignet ist, um eine Betäubung während der Bewegung über die zweite Bahn (5a) durchzuführen, und dass die Elektroden (22,25) des Betäubungselements (12) geeignet sind, den Kopf des Vogels zu fixieren und nach der Betäubung dann den Kopf während der Bewegung durch die zweite Bahn (5a) freizugeben.

3. Vorrichtung nach Anspruch 1 oder 2, **dadurch gekennzeichnet, dass** die Positioniermittel (12) geeignet sind, um sich über eine erste Bahn (5b) zusammen mit einem entsprechenden Teil der Bahn der Haken zu verschieben und dass das mindestens eine Betäubungselement (20) geeignet ist, um sich über eine zweite Bahn (5a) zusammen mit einem entsprechenden Teil der Haken zu verschieben.

4. Vorrichtung nach Anspruch 3, **dadurch gekennzeichnet, dass**
- die Vorrichtung geeignet ist, um eine Anzahl Vögel nacheinander zu betäuben,
- die Transportmittel versehen sind mit einer Kette (5), die entlang einer linearen Führung geführt wird und an der eine Anzahl Haken montiert sind, wobei die Führung geeignet ist, die Kette (5) entlang mindestens der ersten (5b) und der zweiten Bahn (5a) zu führen, und mit Antriebsmitteln zum Antreiben der Kette (5) in ihrer Bewegung,
- die Positioniermittel (12) auf einem ersten beweglichen Träger (1) angebracht sind, der von Antriebsmitteln angetrieben wird und geeignet ist, die Positioniermittel (20) entlang mindestens der einen Bahn (5b) zu bewegen, die Antriebsmittel geeignet sind, die Positioniermittel (20) auf dem Träger (1) synchron mit den Haken an der Kette (5) innerhalb der ersten Bahn (5b) zu bewegen, und
- die Betäubungselemente (20) auf einem zweiten beweglichen Träger (3) angebracht sind, der von Antriebsmitteln angetrieben wird und geeignet ist, die Betäubungselemente (20) entlang der zweiten Bahn (5a) zu bewegen und die Antriebsmittel geeignet sind, die Betäubungsmittel (20) auf dem Träger (3) synchron mit den Haken an der Kette (5) innerhalb der zweiten Bahn (5a) zu bewegen.

5. Vorrichtung nach Anspruch 4, **dadurch gekennzeichnet, dass** der erste Träger eine erste, im Wesentlichen horizontal platzierte Scheibe (1), die um eine vertikale Welle (2) drehbar ist und an deren Rand die Positioniermittel (12) platziert sind, umfasst, und dass der zweite Träger eine zweite, im Wesentlichen horizontal platzierte Scheibe (3), die um eine vertikale Welle (4) drehbar ist und an deren Rand die Betäubungselemente (20) platziert sind, umfasst.

6. Vorrichtung nach einem der vorhergehenden Ansprüche, **dadurch gekennzeichnet, dass** die Positioniermittel (12) jeweils ein Schließelement (16) umfassen, das zwischen einer Ruheposition und einer aktiven Position beweglich ist und das an ein Betätigungselement (15) gekoppelt ist, und dass die Vorrichtung eine feste Scheibe (9) umfasst, die mit einer Kontur versehen ist, wobei diese Kontur geeignet ist, die Betätigungselemente (15) über mindestens die erste Bahn (5b) zu betätigen.

7. Vorrichtung nach Anspruch 6, **dadurch gekennzeichnet, dass** das Schließelement (16) ein im Wesentlichen V-förmiges Teil umfasst, das in seiner Ruheposition im Wesentlichen horizontal verläuft, mit seinem offenen Ende radial nach außen gerichtet, und in seiner aktiven Position im Wesentlichen vertikal verläuft, mit seinem offenen Ende nach oben, und das mit einem stabähnlichen Betätigungselement (15) verbunden ist, das drehend mit der ersten Scheibe (1) verbunden ist.

8. Vorrichtung nach einem der Ansprüche 4-7, **dadurch gekennzeichnet, dass** jedes der Betäubungselemente (20) eine feste Elektrode (22) und eine bewegliche Elektrode (25), gekoppelt an ein Betätigungselement (23), umfasst, und dass die Vorrichtung eine feste Scheibe (10) umfasst, die mit einer Kontur versehen ist, wobei diese Kontur geeignet ist, um die Betätigungselemente (23) über mindestens die zweite Bahn (5a) zu betätigen.

9. Vorrichtung nach Anspruch 8, **dadurch gekennzeichnet, dass** die beweglichen Elektroden (25) jeweils mit einem Bein (23) eines L-förmigen Armes, verbunden mit der zweiten Scheibe (3), verbunden sind, zur Drehung um eine horizontale Welle, und dass das zweite Bein (26) des Armes mit einer Rolle (29) verbunden ist, die in vertikaler Richtung durch eine in der zweiten Scheibe (3) angeordnete Öffnung (28) verläuft und die mit der Kontur der festen Scheibe (10), angeordnet unter der zweiten Scheibe (3) in Kontakt gebracht werden kann, und dass der Arm an eine Feder (30) gekoppelt ist, geeignet um die zweite Elektrode (25) in die Fixierposition zu zwingen.

10. Vorrichtung nach Anspruch 9, **dadurch gekennzeichnet, dass** mindestens eine der Elektroden (22, 25) im Wesentlichen flach ist und mit Vorsprüngen (35), die zur anderen Elektrode (22, 25) gerichtet sind, versehen ist.

11. Vorrichtung nach den Ansprüchen 8, 9 oder 10, **dadurch gekennzeichnet, dass** die Vorrichtung mit einem Schaltelement (11), angeschlossen zwischen der Spannungsquelle (40) und den Elektroden (22,25) der Betäubungselemente (12), versehen ist, um, abhängig von der Drehposition der zweiten drehbaren Scheibe (3), die Spannungsquelle (40) an die Elektroden (22,25) der Betäubungselemente (20) anzuschließen.

12. Vorrichtung nach einem der Ansprüche 8-11, **dadurch gekennzeichnet, dass** die Vorrichtung mit einem Steuerungselement (11) zur Steuerung der Spannungsquelle (40) und einem Stromsensor versehen ist, wobei das Steuerungselement (11) geeignet ist, den elektrischen Widerstand zwischen den Elektroden (22,25) zu messen und die Spannungsquelle (40) nach dem Messen des elektrischen Widerstands so zu steuern, dass der durch das Gehirn des Vogels fließende Strom stark genug ist, um den Vogel zu betäuben.

13. Vorrichtung nach einem der Ansprüche 3-12, **dadurch gekennzeichnet, dass** die lineare Führung der Kette (5) über die erste Bahn (5b) von einer dritten Scheibe (7) gebildet wird, die in Rotation an die erste Scheibe (1) gekoppelt und über der ersten Scheibe (1) platziert ist, und die mit Eingreifmitteln zum Ergreifen der Kette (5) versehen ist, und dass die lineare Führung der Kette (5) über die zweite Bahn von einer vierten Scheibe (8) gebildet wird, die in Rotation an die zweite Scheibe (3) gekoppelt und über der zweiten Scheibe (8) platziert ist, und die mit Eingreifmitteln zum Ergreifen der Kette versehen ist.

14. Verfahren zur Betäubung von Vögeln wie beispielsweise Geflügel, vor dem Schlachten der Vögel, umfassend den Schritt, in dem die Vögel einem elektrischen Potenzial ausgesetzt werden, wobei der elektrische Strom durch das Gehirn des Vogels zur Betäubung stark genug ist, um den Vogel zu betäuben, wobei die Betäubung erfolgt, indem Elektroden (22,25) auf beiden Seiten von Kopf und Hals des Vogels angebracht werden und dann die Elektroden (22,25) an eine Spannungsquelle (40) angeschlossen werden, wobei vor der Betäubung die Vögel an ihren Beinen aufgehängt werden und von Transportmitteln (5) über eine erste Bahn (5b) zu einer Position über einem Betäubungselement (20), wo der Kopf des Vogels in dem Betäubungselement (20) platziert wird, transportiert werden, wobei der Kopf des Vogels während der Bewegung durch die erste Bahn (5b) von Positioniermitteln (12), die jeweils ein Schließelement (16) mit einem im Wesentlichen V-förmigen Teil umfassen, positioniert wird, wobei die Bewegung der aufgehängten Vögel durch Halter (14) angeordnet auf den Transportmitteln (5) beschränkt wird, wobei die Halter (14) abwärts entlang dem Leib der an ihren Beinen aufgehängten Vögel verlaufen.

15. Verfahren nach Anspruch 14, **dadurch gekennzeichnet, dass** die Vögel während des Betäubens über eine zweite Bahn (5a) bewegt werden, dass der Kopf der Vögel mindestens während des Betäubens fixiert wird und dass der Kopf nach dem Betäuben freigegeben wird.

## Revendications

1. Dispositif pour étourdir des oiseaux, comme de la volaille, avant l'abattage des oiseaux, comprenant :
- un élément d'étourdissement (20) pourvu d'au moins une électrode (22) et d'une deuxième électrode (25) pour soumettre les oiseaux à un potentiel électrique et adaptées pour réaliser un contact avec les deux côtés de la tête de l'oiseau ;
- une source de tension électrique (40) pouvant être connectée à la première (22) et à la deuxième électrode (25) ;
- dans lequel la source de tension (40) est dimensionnée pour provoquer le passage d'un courant électrique dans le cerveau de l'oiseau aux fins d'étourdissement qui est suffisamment fort pour étourdir l'oiseau ;
- au moins une paire de crochets pour suspendre par les pattes les oiseaux à étourdir;
- un moyen de transport pour transporter ladite au moins une paire de crochets et l'oiseau qui y est suspendu sur un premier chemin (5b) jusqu'à une position située au-dessus de l'élément d'étourdissement (20) où la tête de l'oiseau est immobilisée dans l'élément d'étourdissement (20) ; et
- des moyens de positionnement (12) pour positionner la tête de l'oiseau à l'emplacement de l'élément d'étourdissement (20), adapté pour se déplacer d'une position ouverte à une position de positionnement pendant le déplacement dans le premier chemin (5b),
**caractérisé en ce que** le moyen de transport (5) est en outre pourvu de supports (14) qui s'étendent vers le bas à la position des crochets le long du ventre des oiseaux suspendus par leurs pattes et qui limitent le mouvement des oiseaux suspendus, et **en ce que** les moyens de positionnement (12) comprennent chacun un élément fermant (16) qui comprend une pièce substantiellement en forme de V.

2. Dispositif selon la revendication 1, **caractérisé en ce que** l'élément d'étourdissement (12) est adapté pour exécuter un mouvement sur un deuxième chemin (5a) et est adapté pour réaliser un étourdissement pendant le mouvement sur le deuxième chemin (5a), et **en ce que** les électrodes (22, 25) de l'élément d'étourdissement (12) sont adaptées pour immobiliser la tête de l'oiseau et, suite à l'étourdissement, pour libérer ensuite la tête pendant le mouvement sur le deuxième chemin (5a).

3. Dispositif selon la revendication 1 ou 2, **caractérisé en ce que** les moyens de positionnement (12) sont adaptés pour se déplacer de façon simultanée sur un premier chemin (5b) avec une partie correspondante du chemin des crochets et **en ce que** ledit au moins un élément d'étourdissement (20) est adapté pour se déplacer de façon simultanée sur un deuxième chemin (5a) avec une partie correspondante des crochets.

4. Dispositif selon la revendication 3, **caractérisé en ce que** :
- le dispositif est adapté pour étourdir un nombre d'oiseaux de façon successive,
- le moyen de transport est pourvu d'une chaîne (5) qui est guidée le long d'un guide linéaire et sur laquelle est monté un nombre de crochets, le guide étant adapté pour guider la chaîne (5) au moins le long du premier (5b) et du deuxième chemin (5a), et d'un moyen d'entraînement pour entraîner la chaîne (5) dans son mouvement,
- les moyens de positionnement (12) sont placés sur un premier support mobile (1) qui est entraîné par un moyen d'entraînement et qui est adapté pour déplacer les moyens de positionnement (20) sur le support (1) de façon synchronisée avec les crochets présents sur la chaîne (5) sur le premier chemin (5b), et
- les éléments d'étourdissement (20) sont placés sur un deuxième support mobile (3) qui est entraîné par un moyen d'entraînement et qui est adapté pour déplacer les éléments d'étourdissement (20) le long du deuxième chemin (5a) et le moyen d'entraînement est adapté pour déplacer les éléments d'étourdissement (20) placés sur le support (3) de façon synchronisée avec les crochets présents sur la chaîne (5) sur le deuxième chemin (5a).

5. Dispositif selon la revendication 4, **caractérisé en ce que** le premier support comprend un premier disque placé de façon substantiellement horizontale (1) qui peut tourner autour d'un axe vertical (2) et sur le bord duquel sont placés les moyens de positionnement (12), et **en ce que** le deuxième support comprend un deuxième disque placé de façon substantiellement horizontale (3) qui peut tourner autour d'un axe vertical (4) et sur le bord duquel sont placés les éléments d'étourdissement (20).

6. Dispositif selon l'une quelconque des revendications précédentes, **caractérisé en ce que** les moyens de positionnement (12) comprennent chacun un élément fermant (16) qui est mobile entre une position de repos et une position active et qui est accouplé à un élément d'actionnement (15), et **en ce que** le dispositif comprend un disque fixe (9) pourvu d'un contour, ce contour étant adapté pour actionner les éléments d'actionnement (15) au moins sur le premier chemin (5b).

7. Dispositif selon la revendication 6, **caractérisé en ce que** l'élément fermant (16) comprend une pièce substantiellement en forme de V qui, dans sa position de repos, s'étend de façon substantiellement horizontale avec son extrémité ouverte orientée radialement vers l'extérieur et qui, dans sa position active, s'étend de façon substantiellement verticale avec son extrémité ouverte orientée vers le haut, et qui est connectée à un élément d'actionnement en forme de tige (15) connecté à pivotement au premier disque (1).

8. Dispositif selon l'une quelconque des revendications 4 à 7, **caractérisé en ce que** chacun des éléments d'étourdissement (20) comprend une électrode fixe (22) et une électrode mobile (25) accouplée à un élément d'actionnement (23), et **en ce que** le dispositif comprend un disque fixe (10) pourvu d'un contour, ce contour étant adapté pour actionner les éléments d'actionnement (23) au moins sur le deuxième chemin (5a).

9. Dispositif selon la revendication 8, **caractérisé en ce que** les électrodes mobiles (25) sont connectées chacune à une branche (23) d'un bras en forme de L connecté au deuxième disque (3) pour tourner autour d'un axe horizontal, et **en ce que** la deuxième branche (26) du bras est connectée à une roulette (29) qui s'étend dans une direction verticale à travers une ouverture (28) pratiquée dans le deuxième disque (3) et qui peut être mise en contact avec le contour du disque fixe (10) placé sous le deuxième disque (3), et **en ce que** le bras est accouplé à un ressort (30) adapté pour mettre la deuxième électrode (25) dans la position fixe.

10. Dispositif selon la revendication 9, **caractérisé en ce qu'**au moins l'une des électrodes (22, 25) est substantiellement plate et est pourvue de protubérances (35) orientées vers l'autre électrode (22, 25).

11. Dispositif selon la revendication 8, 9 ou 10, **caractérisé en ce que** le dispositif est pourvu d'un élément de commutation (11) connecté entre la source de tension (40) et les électrodes (22, 25) des éléments d'étourdissement (12) dans le but de connecter la source de tension (40) aux électrodes (22, 25) des éléments d'étourdissement (20) soumis à la position de rotation du deuxième disque rotatif (3).

12. Dispositif selon l'une quelconque des revendications 8 à 11, **caractérisé en ce que** le dispositif est pourvu d'un élément de commande (11) pour commander la source de tension (40) et un capteur de courant, dans lequel l'élément de commande (11) est adapté pour mesurer la résistance électrique entre les électrodes (22, 25) et pour commander la source de tension (40) suite à la mesure de la résistance électrique de telle manière que le courant qui circule dans le cerveau de l'oiseau est suffisamment fort pour étourdir l'oiseau.

13. Dispositif selon l'une quelconque des revendications 3 à 12, **caractérisé en ce que** le guide linéaire de la chaîne (5) sur le premier chemin (5b) est formé par un troisième disque (7) qui est accouplé en rotation avec le premier disque (1) et placé au-dessus du premier disque (1) et qui est pourvu d'un moyen de mise en prise pour se mettre en prise avec la chaîne (5), et **en ce que** le guide linéaire de la chaîne (5) sur le deuxième chemin est formé par un quatrième disque (8) qui est accouplé en rotation avec le deuxième disque (3) et placé au-dessus du deuxième disque (8) et qui est pourvu d'un moyen de mise en prise pour se mettre en prise avec la chaîne.

14. Procédé pour étourdir des oiseaux, comme de la volaille, avant l'abattage des oiseaux, comprenant l'étape consistant à soumettre les oiseaux à un potentiel électrique, le courant électrique circulant dans le cerveau de l'oiseau pour l'étourdissement étant suffisamment fort pour étourdir l'oiseau, l'étourdissement se produisant en appliquant des électrodes (22, 25) des deux côtés de la tête et du cou de l'oiseau et en reliant ensuite les électrodes (22, 25) à une source de tension (40), dans lequel avant l'étourdissement, les oiseaux sont suspendus par leurs pattes et transportés par un moyen de transport (5) sur un premier chemin (5b) jusqu'à une position située au-dessus d'un élément d'étourdissement (20) où la tête de l'oiseau est immobilisée dans l'élément d'étourdissement (20), dans lequel la tête de l'oiseau est positionnée par des moyens de positionnement (12) qui comprennent chacun un élément fermant (16) qui comprend une pièce substantiellement en forme de V tout en se déplaçant dans le premier chemin (5b), dans lequel le mouvement des oiseaux suspendus est limité par des supports (14) placés sur le moyen de transport (5), lesquels supports (14) s'étendent vers le bas le long du ventre des oiseaux suspendus par leurs pattes.

15. Procédé selon la revendication 14, **caractérisé en ce que** les oiseaux sont déplacés pendant l'étourdissement sur un deuxième chemin (5a), **en ce que** la tête des oiseaux est fixe, au moins pendant l'étourdissement, et **en ce que** la tête est libérée après l'étourdissement.
